# EUROPÄISCHE PATENTSCHRIFT

(11) **EP 3 717 325 B1**
(45) Veröffentlichungstag und Bekanntmachung des Hinweises auf die Patenterteilung: **20.11.2024**
(21) Anmeldenummer: 18769964.0
(22) Anmeldetag: 07.09.2018
(51) Int. Cl.: B60W 30/18, B60W 10/02, B60W 10/06, B60W 10/16, B60W 10/184, B60W 40/064, B60W 50/08, F16D 48/08

(54) **VERFAHREN UND FAHRDYNAMIK-SYSTEM ZUR REGELUNG EINES ANFAHRVORGANGES EINES FAHRZEUGS**
METHOD AND VEHICLE DYNAMICS SYSTEM FOR CONTROLLING A STARTING PROCESS OF A VEHICLE
PROCÉDÉ ET SYSTÈME DE DYNAMIQUE DE CONDUITE SERVANT À RÉGULER UNE OPÉRATION DE DÉMARRAGE D'UN VÉHICULE

(30) Priorität: 30.11.2017 DE 102017011114
(43) Veröffentlichungstag der Anmeldung: 07.10.2020
(73) Patentinhaber: ZF CV Systems Europe BV, 1170 Brussels (BE)
(72) Erfinder: LÜLFING, Ralph-Carsten, 30826 Garbsen (DE); SCHMIDT, Detlef, 30989 Gehrden (DE); KAMPING, Ruppert, 30177 Hannover (DE); LENZ, Thomas, 31275 Lehrte (DE); MUNKO, Tobias, 30459 Hannover (DE); SELENT, Stefan, 31582 Nienburg (DE)
(74) Vertreter: Rabe, Dirk-Heinrich
(86) Internationale Anmeldenummer: PCT/EP2018/074177
(87) Internationale Veröffentlichungsnummer: WO 2019/105618

(56) Entgegenhaltungen:
- WO-A1-2007/116123
- DE-A1- 10 222 351
- DE-A1- 102004 044 788
- DE-A1- 19 850 978
- DE-A1- 19 917 437

## Beschreibung

Die Erfindung betrifft ein Verfahren und ein Fahrdynamik-System zur Regelung eines Anfahrvorganges eines Fahrzeugs.

Anfahrvorgänge sind insbesondere auf einer Fahrbahn mit einem niedrigen Reibungskoeffizient problematisch. So kann bei ungünstigen Witterungsbedingungen wie Eis oder Schnee auch beim vorsichtigen Anfahren des Fahrzeugs frühzeitig ein erhöhter Schlupf an den Rädern der Antriebsachse auftreten.

Um dennoch einen sicheren Anfahrvorgang bei durchdrehenden Rädern zu ermöglichen, sind Antriebsschlupfregelsysteme (ASR, ATC) bekannt, bei denen der Schlupf der angetriebenen Räder gemessen und die Räder in Abhängigkeit dieses Schlupfes abgebremst werden, und/oder die Motorleistung reduziert wird, um den Schlupf zu begrenzen.

Weiterhin sind Differenzialsperren bekannt, bei denen somit in die Verteilung des Antriebsmomentes auf die einzelnen Räder eingegriffen wird.

Es zeigt sich jedoch, dass durch bekannte Antriebsschlupfregelsysteme nicht alle Probleme bei Anfahrvorgängen gelöst werden, insbesondere bei niedrigen Haftwerten, können weiterhin Instabilitäten oder eine verminderte Traktion auftreten.

So wird bei bekannten Systemen regelnd eingegriffen, wenn eine Radrehzahl erreicht ist, die bei Schnee oder Eis als Untergrund diesen zum Anschmelzen bringt, was aufgrund des entstehenden Wasserfilms zu einer weiteren Verringerung der Haftwerte führt.

Des Weiteren treffen bekannte Systeme keine Vorkehrungen, um bei geringen Haftwerten ein entgegen des Fahrerwunsches vermindertes Antriebsmoment an die Antriebsräder zu leiten um einen übermäßigen Schlupf im Vorfeld zu vermeiden.

Die US 6182002 B1 beschreibt ein Traktions-Regelungssystem, bei dem eine Radgeschwindigkeit auf Basis der gemessenen Fahrzeugbeschleunigung statt der gemessenen Radgeschwindigkeit ermittelt wird. Bei Ermittlung einer zu lang andauernden Beschleunigung wird ein Motormoment reduziert.

Aus der DE 69507405 T2 ist eine Motordrehmomentregelung und Antischlupfregelungsverfahren bekannt, um einen Schlupf in den Antriebsrädern eines Kraftfahrzeugs zu reduzieren. Hierbei wird ein Zündpunkt in Abhängigkeit eines verringerten Motorausgangsdrehmomentes zeitlich verzögert, um eine bestimmte Schlupfbedingung zu reduzieren

Die EP 1125783 B1 beschreibt ein Verfahren zur Steuerung eines Triebstrangs eines Kraftfahrzeugs mit einem Radschlupfregelsystem und einem automatischen Getriebe, bei dem das Schließen einer Kupplung in dem Getriebe auf Grundlage eines durch das Radschlupfregelsystems erzeugten Signals gesteuert wird, wobei das Signal den Reibungskoeffizienten zwischen einem Fahrzeugrad und einer Straßenoberfläche darstellt und/oder die Istmotordrehzahl darstellt.

EP1730006B1 zeigt ein Verfahren zur Bereitstellung von Bremsdruck an den Rädern eines fahrenden Fahrzeugs, unter Bestimmung des Vorhandenseins eines dynamischen Fahrzeugzustandes, um an den Fahrzeugrädern unabhängig von dem Bremsbefehl des Fahrers Bremsdruck bereitzustellen.

Hierbei ist ein Modulator zwischen dem Doppelbremsventil und dem angetriebenen Rad vorgesehen, der durch die elektronische Steuereinheit gesteuert wird, um das angetriebene Rad selektiv mit Bremsdruck zu versorgen.

Die DE 198 50 978 A1 offenbart eine Vorrichtung zur automatisierten Betätigung einer Kupplung im Antriebsstrang eines Kraftfahrzeuges, mit einer Steuereinheit zur Ansteuerung der automatisierten Betätigung der Kupplung, die mit einem elektronischen Fahrzeugstabilitätssystem, das ein Steuersignal abgibt, wenn es aktiv ist, in Signalverbindung steht, mit einem von der Steuereinheit ansteuerbaren Aktor zur Einstellung des von der Kupplung übertragbaren Drehmoments, wobei die Steuereinheit bei einer automatisierten Betätigung einer Kupplung bei einem Vorliegen eines eine Aktivität anzeigenden Steuersignals des elektronischen Stabilitätssystems das von der Kupplung übertragbare Drehmoment mittels des Aktors von dem aktuell angesteuerten Wert des übertragbaren Drehmoments auf einen Maximalwert des übertragbaren Drehmoments steuert.

Der Erfindung liegt daher die Aufgabe zugrunde, ein Verfahren und ein Fahrdynamik-System zur Regelung eines Anfahrvorganges eines Fahrzeuges dahingehend weiterzubilden, dass ein sicherer Anfahrvorgang mit guter Traktion, insbesondere bei geringen Haftwerten, ermöglicht wird.

Diese Aufgabe wird durch ein Verfahren und ein Fahrdynamik-System gemäß den unabhängigen Ansprüchen gelöst. Die Unteransprüche beschreiben bevorzugte Weiterbildungen.

Das erfindungsgemäße Fahrdynamik-System ist zur Durchführung eines erfindungsgemäßen Verfahrens vorgesehen. Weiterhin ist das erfindungsgemäße Verfahren insbesondere unter Einsatz oder Verwendung eines erfindungsgemäßen Fahrdynamik-Systems vorgesehen.

Der Erfindung liegt der Gedanke zugrunde, bereits vor Auftreten des ersten Schlupfes bzw. der Instabilität einen weichen Anfahrvorgang einzustellen. Hierzu wird insbesondere das Motormoment bestimmt, das ausreicht, um das Fahrzeug anfahren zu lassen, ohne dass gleichzeitig die Räder nennenswerten Schlupf aufbauen. In die Bestimmung des Motormomentes können insbesondere Faktoren wie Fahrzeugmasse, Fahrbahnneigung, Reibungsverluste im Antriebsstrang, gewünschte Fahrzeugbeschleunigung usw. einfließen.

Vorzugsweise werden die Antriebskräfte, die von den angetriebenen Rädern auf die Fahrbahn übertragen werden, durch das erfindungsgemäße Verfahren begrenzt, und der Schlupf wird vorzugsweise auf einen geringeren Wert als bei bekannten Antriebsschlupfregelsystemen geregelt.

Gemäß einer bevorzugten Ausführungsform erfolgt eine Einbeziehung der Kupplungssteuerung. Diese stützt sich auch auf das für die Motorregelung berechnete maximale Antriebsmoment und begrenzt während des Einkuppelvorganges das Kupplungsmoment entsprechend und hilft somit, einen übermäßigen Schlupf an den Antriebsrädern zu vermeiden.

Weiterhin kann gemäß einer vorteilhaften Weiterbildung ein Bremsdruck angesteuert bzw. geregelt werden. So kann beim Anfahren zunächst die Radbremse eingelegt sein und dann geregelt oder gesteuert gelöst werden. Hierbei kann ein Regelsequenz-Bremsdruck an Radbremsen der angetriebenen Räder eingestellt werden. In einer bevorzugten Ausführungsform werden die Räder, die vor der Aktivierung der Regelsequenz einen Schlupf aufweisen, bis zum Stillstand abgebremst.

Die Ermittlung des Radschlupfes erfolgt durch Messung der Radgeschwindigkeiten. Bevorzugt ist eine Messung mittels aktiver Raddrehzahlsensoren vorgesehen, z.B. auch bei weniger als einer Radumdrehung. Es können jedoch als Radgeschwindigkeiten z.B. auch Raddrehzahlen der angetriebenen Räder über passive Raddrehzahlsensoren gemessen werden.

Bei den Ausführungsformen, bei denen ein Regelsequenz-Bremsdruck eingestellt ist, bleibt dieser während des Anfahrvorgangs zuerst aufrecht erhalten. Hierdurch wird vermieden, dass beim Überschreiten des Schlupfes, der einen maximalen Haftwert erzeugt und folgend sich stark verringernden Haftwerts ein schneller Anstieg der Radgeschwindigkeit resultiert, bevor die Regelung den Schlupf wieder verringert. Es wird somit eine höhere Regelgüte der Antriebskraft und des Schlupfes der Antriebsräder erreicht. Bevorzugt wird während des Anfahrvorgangs der Regelsequenz-Bremsdruck langsam verringert.

Somit soll auf der Haftwert-Schlupf-Kurve, die den Haftwert bzw. die übertragbare Kraft in Abhängigkeit des Radschlupfes beschreibt, der Maximalwert vorzugsweise nicht überschritten werden, sondern es wird ein Anfahrvorgang bei angepasstem, vorzugsweise optimalen Haftwert eingestellt. Somit wird gegenüber einem herkömmlichen ASR bzw. ATC ein langsamerer Anfahrvorgang eingeregelt, der jedoch mit hoher Stabilität und guter Traktion erfolgt. Bei der herkömmlichen ASR-Regelung, niedrigen Haftwerten und geringen Fahrgeschwindigkeiten kann gegebenenfalls die Haftreibung bzw. Rollreibung in die geringere Gleitreibung übergehen, wenn der Schlupf zu schnell erhöht wird.

Der Haftwert (Reibungskoeffizient) der Fahrbahn kann ermittelt werden anhand des letzten Bremsvorgangs oder anhand der letzten Brems- und Beschleunigungsvorgänge oder alternativ anhand des sich einstellenden Schlupfes beim aktuellen Anfahrvorgang, oder er kann als niedriger Wert abgeschätzt werden. Es wird ein niedriges Antriebs-Moment auf die Abtriebswelle bzw. die angetriebenen Fahrzeugräder eingestellt, wobei hierzu das Motormoment und/oder die Kupplungs-Getriebeeinheit vorzugsweise mit einer Funktionskurve angesteuert wird, die eine Rampenführung oder Rampenfunktion ermöglicht, z.B. in Abhängigkeit der Zeit oder einer Radgeschwindigkeit der angetriebenen Räder.

Bei einem Anfahrvorgang erfolgt eine Ansteuerung einer Kupplungs-Getriebeeinheit mit einer Einkuppelvorgangsdauer, die größer als eine bei deaktivierter Regelsequenz vorgesehene Standardeinkuppelvorgangsdauer ist, wobei die Standardeinkuppelvorgangsdauer wiederum fest vorgegeben sein kann oder auch z.B. erlernt oder aus vorangegangen Einkuppelvorgängen erlernt werden kann.

Eine Haftwertbestimmung ermöglicht insbesondere auch ein automatisches oder selbsttätiges Aktivieren des erfindungsgemäßen Verfahrens zur Regelung des Anfahrvorgangs.

Die Regelsequenz wird bei Erreichen von Grenzwerten zum Beispiel einer Grenz-Fahrgeschwindigkeit und/oder eines Grenz-Haftwerts, gegebenenfalls auch in Abhängigkeit eines Grenz-Schlupfes, beendet und das Regelsequenz-Signal zurück gesetzt, sodass nach der Regelsequenz des Anfahrvorgangs zum Beispiel eine übliche Antriebsschlupfregelung durchgeführt wird.

Das Verfahren zur Regelung des Anfahrvorganges kann somit in ein Antriebsschlupf-Regelverfahren integriert werden, bzw. als erster Schritt diesem vorgeschaltet bzw. einbezogen werden.

In die Fahrzustandsdaten kann weiterhin eine ermittelte Fahrbahnneigung einbezogen werden, die zum Beispiel durch einen Längsbeschleunigungssensor und/oder Kartenmaterial ermittelt wird. Somit werden das ermittelte Antriebsmoment und/oder der Bremsdruck in dem ersten Schritt der Steuerung des Anfahrvorgangs unter Einbeziehung der Fahrbahnneigung, und/oder einer ermittelten oder bekannten Fahrzeugmasse durchgeführt.

Die Aktivierung der Regelsequenz kann gemäß unterschiedlichen Ausführungsformen durch Aktivierung mittels des Fahrers gestartet werden, das heißt wenn der Fahrer zum Beispiel ein Aktivierungsmittel betätigt und somit gezielt den sanften Anfahrvorgang wählt. Ergänzend oder alternativ kann dies auch bei einer Ermittlung eines derartigen Fahrzeug-Zustandes bzw. Zustandes der Fahrbahn gewählt werden, wobei hierzu zum Beispiel ein ermittelter Haftwert (Reibungskoeffizient), die Fahrzeugmasse, die Fahrbahnneigung einbezogen werden.

Ist die Regelsequenz aktiv, wird in Abhängigkeit der Fahrzeugmasse bzw. der Last auf der angetriebenen Achse, des ermittelten oder angenommenen Haftwerts der Reifen zum Untergrund und der Fahrbahnneigung ein maximales Motorantriebsmoment definiert, das geringer als das maximale Motorantriebsmoment ist, wenn die Regelsequenz deaktiviert ist.

Zusätzlich kann sich die Kupplungssteuerung ebenfalls auf das definierte Motorantriebsmoment beziehen, das geringer als das maximale Motorantriebsmoment bei inaktiver Regelsequenz ist. Dazu wird für die Einkuppelvorgangsdauer ein höherer Wert gesetzt, der gegebenenfalls in Abhängigkeit der zuletzt genannten Parameter wie Fahrzeugmasse und Haftwert beziehungsweise Haftwert ermittelt wird, als der Wert für die Standardeinkuppelvorgangsdauer, wenn die Regelsequenz deaktiviert ist.

Ergänzend wird durch Setzen eines Regelsequenz-Signals der Regelsequenz-Bremsdruck an die Bremsen der angetriebenen Räder angelegt, nachdem in bevorzugter Weise die möglicherweise noch rotierenden Räder bis zum Stillstand abgebremst worden sind.

Somit wird die Antriebskraft, die die angetriebenen Räder auf die Fahrbahn aufbringen, verringert und langsamer erhöht, als wenn die Regelsequenz deaktiviert ist.

Der initiale, nachhaltig haftwertvermindernde hohe Schlupf eines Anfahrvorgangs ohne die erfindungsgemäße Regelsequenz wird vermieden.

Tritt dennoch ein Schlupf auf, der so hoch ist, dass sich der Haftwert verringert, ist der Schlupf geringer und der Abfall des Haftwertes geringer als ohne die erfindungsgemäße Regelsequenz. Die übertragbare Antriebskraft auf die Fahrbahn erhöht sich durch die erfindungsgemäße Regelsequenz insbesondere bei geringen Haftwerten und insbesondere bei Schnee oder Eis als Untergrund.

Erfindungsgemäß ist somit eine Umsetzung allein durch Begrenzung des Motomoments möglich. Die erste Erweiterung ist vorzugsweise die Einbeziehung der Kupplungsregelung. Die zweite Erweiterung ist vorzugsweise das zusätzliche Einbeziehen der Bremsregelung.

Die Erfindung wird im Folgenden anhand der beiliegenden Zeichnungen an einigen Ausführungsformen näher erläutert. Es zeigen:
- Fig. 1: ein Fahrzeug mit einem Fahrdynamik-Regelsystem gemäß einer Ausführungsform der Erfindung auf einer Fahrbahn;
- Fig. 2: ein Fahrzeug mit einer Vorrichtung gemäß einer Ausführungsform der Erfindung;
- Fig. 3: ein Flussdiagramm eines nicht erfindungsgemäßen Verfahrens gemäß einer Ausführungsform;
- Fig. 4: eine Haftwert-Schlupf-Kurve.

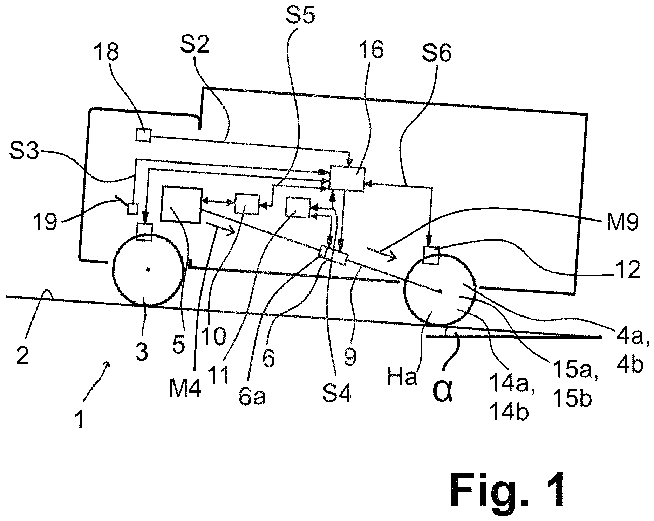

Ein Nutzfahrzeug 1 steht gemäß Figur 1 auf einer Fahrbahn 2, die einen Neigungswinkel α gegenüber der Horizontalen A aufweist. Das Fahrzeug 1 ist somit in Stillstand, das heißt die Fahrgeschwindigkeit v ist 0, weiterhin stehen die Räder 3 der nicht angetriebenen Vorderachse Va und die Hinterräder 4a, 4b der angetriebenen Hinterachse Ha still, das heißt die Radgeschwindigkeiten n3 und n4a, n4b sind 0. Die Fahrbahn 2 weist einen niedrigen Haftwert (Reibungskoeffizienten) µ auf, zum Beispiel aufgrund von Glatteis oder Schnee.

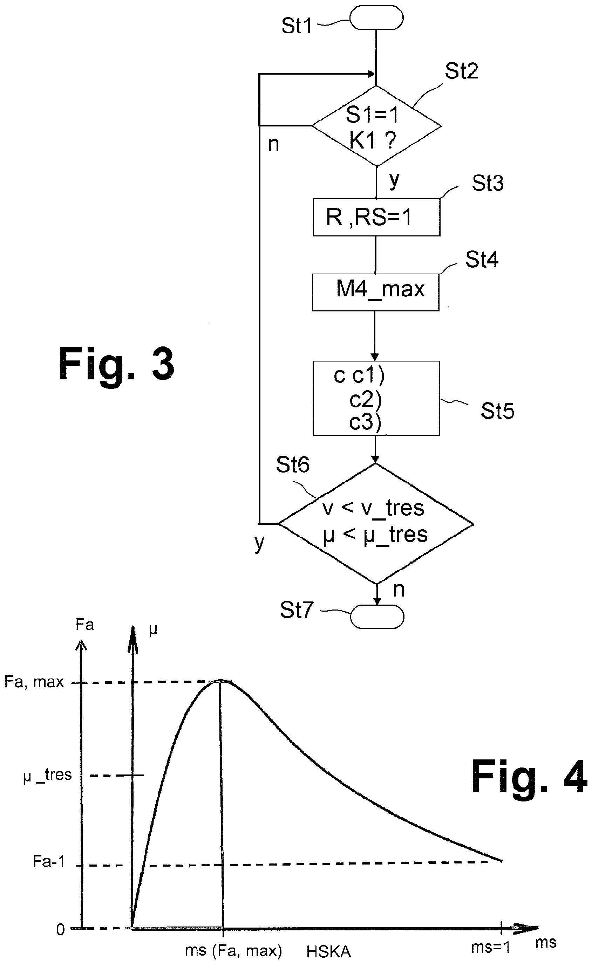

In Fig. 4 sind auf der Abszisse Schlupfwerte ms und auf der rechten Ordinaten Haftwerte µ sowie links davon auf einer weiteren Ordinate eine von den Reifen übertragbare Radkraft Fa, d.h. Bremskraft und Beschleunigungskraft, aufgezeichnet. Somit wird bei einem herkömmlichen Anfahrvorgang bei durchdrehenden Hinterrädern 4a, 4b ein Schlupf ms=1 ausgebildet, der lediglich die Übertragung einer Standard-Radkraft Fa-1 ermöglicht. Hingegen wird erfindungsgemäß bei dieser Ausführungsform eine maximal übertragbare Kraft Fa, max bei einem Zielschlupf ms(Fa, max) erreicht, d.h. nicht im Stillstand, sondern bei etwas Schlupf; danach beginnt rechts von dem Zielschlupf ms(Fa, max) der instabile Ast HSKA der Haftwert-Schlupf-Kurve, der erfindungsgemäß vorzugsweise nicht beschritten wird.

Das Nutzfahrzeug 1 weist einen Motor und eine Kupplungs-Getriebeeinheit 6 auf, sodass der Antriebsstrang durch den Motor 5, die Kupplungs-Getriebeeinheit 6 und eine Abtriebswelle 9 gebildet wird, über die die Hinterräder 4a, 4b angetrieben werden. Die Kupplungs-Getriebeeinheit 6 weist hierbei eine Kupplung 6a auf, die eingelegt bzw. eingerückt wird zur Ausbildung einer Wirkverbindung und ausgerückt wird zur Entkopplung der Hinterräder 4a, 4b vom Motor 5.

Der Motor 5 wird durch eine Motorsteuereinrichtung 10 gesteuert; entsprechend wird die Kupplungs-Getriebeeinheit 6 durch eine Getriebe-Steuereinrichtung 11 angesteuert. Weiterhin ist eine Brems- Steuereinrichtung 12 vorgesehen, die in den - hier nur angedeuteten - Bremssystemen 13 des Nutzfahrzeuges unterschiedliche Aufgaben und unterschiedliche Brems-Regelsysteme durchführt und hierbei unter anderem die Hinterrad-Bremsen 14a und 14b an den Hinterrädern 4a und 4b ansteuert und Radgeschwindigkeits-Signale aufnimmt, hier insbesondere Radgeschwindigkeits-Signale n4a und n4b von Raddrehzahl-Sensoren 15a, 15b an den beiden Hinterrädern 4a, 4b. Hierbei können vorteilhafterweise aktive Raddrehzahl-Sensoren 15a, 15b eingesetzt werden, die somit nicht lediglich passiv ein magnetisches Signal einer mit den Hinterrädern 4a, 4b drehenden Kennungsscheibe erfassen, sondern durch aktive Signalerfassung die Radgeschwindigkeiten genauer erfassen, zum Beispiel bereits bei sehr kleinen Fahrgeschwindigkeiten v von 3km/h bzw. entsprechend kleinen Radgeschwindigkeiten. Das Zusammenwirken der oben genannten Steuereinrichtungen 10, 11, 12 zusammen mit der Fahrdynamik-Steuereinrichtung 16, sowie die durch die Steuereinrichtungen 10, 11, 12, 16 angesteuerten Systeme bilden das Fahrdynamik System 7.

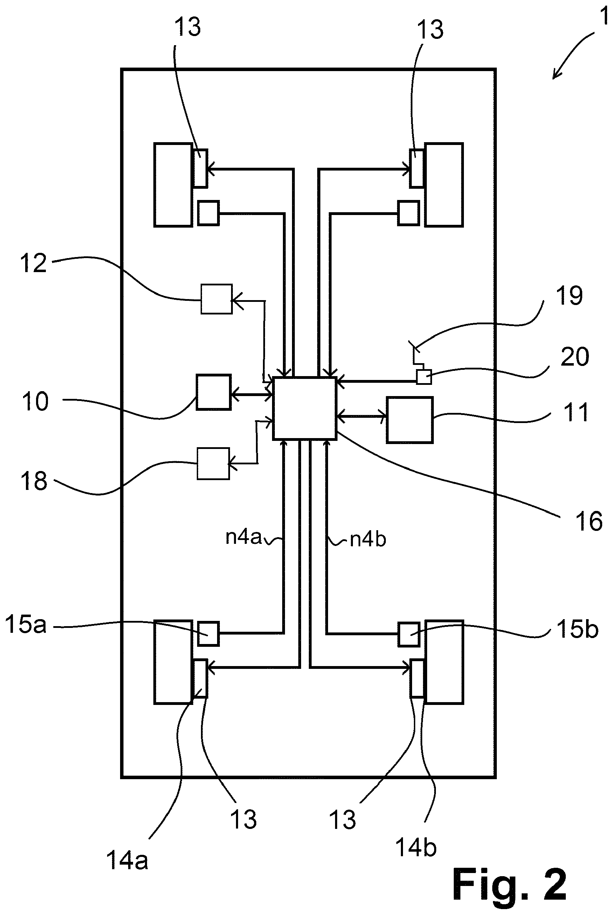

Gemäß des Blockschaltbildes der Figur 2 ist eine Fahrdynamik- Steuereinrichtung 16 zur Durchführung des erfindungsgemäßen Verfahrens als separate Einheit eingezeichnet; sie kann insbesondere in eine der anderen Steuereinrichtungen, insbesondere der Brems-Steuereinrichtung 12 integriert sein. Die Fahrdynamik-Steuereinrichtung 16 führt ein Verfahren zur Steuerung eines Anfahrvorganges durch, wobei sie nach verschiedenen Ausführungen hierzu verschiedene Signale aufnimmt und verschiedene Steuersignale ausgeben kann:

Im Allgemeinen wird die Fahrdynamik-Steuereinrichtung 16 mit der Zündung bzw. dem Zündungs-Signal S1 eingeschaltet, die Regelsequenz jedoch nicht gestartet. Weiterhin kann gemäß einer Ausbildung im Dashboard des Nutzfahrzeugs 1 eine Betätigungseinrichtung 18 vorgesehen sein, die der Fahrer aktiv betätigen und hierdurch ein Aktivierungssignal S2 an die Fahrdynamik-Steuereinrichtung 16 ausgibt und dadurch die Fahrdynamik-Steuereinrichtung 16 einschaltet. Weiterhin nimmt die Fahrdynamik-Steuereinrichtung 16 ein Fahrpedal-Signal S3 auf, das bei Betätigung des Fahrpedals 19 über eine Fahrpedal-Steuereinrichtung 20 ausgegeben wird. Die Fahrdynamik-Steuereinrichtung 16 nimmt weiterhin auch die Radgeschwindigkeits-Signale n4a, n4b auf und gibt ein Getriebe-Anforderungssignal S4 an die Getriebe-Steuereinrichtung 11, sowie entsprechend ein Motormoment-Anforderungssignal S5 an die Motor-Steuereinrichtung 10, und ein ATC-Anforderungssignal S6 an die Brems-Steuereinrichtung 12 aus.

Hierbei können die oben genannten Signale insbesondere über den fahrzeuginternen CAN-Bus übertragen werden, sodass zum Beispiel die Radgeschwindigkeits-Signale n4a, n4b in an sich bekannter Weise von der Brems-Steuereinrichtung 12 eingelesen und über den CAN-Bus anderen Systemen im Fahrzeug, hier somit auch der Fahrdynamik-Steuereinrichtung 16, zur Verfügung gestellt werden.

Die Fahrdynamik-Steuereinrichtung 16 kann hierbei insbesondere in einer der anderen Steuereinrichtungen, insbesondere in der Brems-Steuereinrichtung 12, integriert sein. Sie kann weiterhin in einer Fahrdynamikregel-Steuereinrichtung, die weitere Fahrdynamikregelungen durchführt, wie zum Beispiel eine FDR-Regelung bzw. ESP-Regelung integriert sein, die im allgemeinen im Fahrzeug ergänzend zur Brems-Steuereinrichtung und den anderen Steuereinrichtungen vorgesehen ist.

Weiterhin nimmt die Fahrdynamik-Steuereinrichtung 16 vorteilhafterweise - zusätzlich zu den Radrehzahl-Signalen n4a, n4b auch ein Fahrgeschwindigkeits-Signal v auf, das entweder gemessen und/oder als ABS-Referenzgeschwindigkeit zum Beispiel von der Brems-Steuereinrichtung 12 zur Verfügung gestellt wird, sodass sie hieraus auch die dynamischen Haftwerte µd der Hinterräder 4a und 4b ermitteln kann, oder diesen Schlupf auch gegebenenfalls als Signal direkt über den CAN-Bus aufnehmen kann. Weiterhin nimmt die Fahrdynamik-Steuereinrichtung 16 vorteilhafterweise die Fahrzeugmasse m und die Achslast der angetriebenen Achse auf, die entweder vorab gemessen wurde oder zum Beispiel geschätzt zur Verfügung steht.

Nachfolgend wird mit dem Fahrdynamik-System 7, das die Fahrdynamik-Steuereinrichtung 16 und die oben genannten Komponenten aufweist, ein nicht erfindungsgemäßes Verfahren zur Steuerung eines Anfahrvorgangs gemäß dem Flussdiagramm der Figur 3 beschrieben:
Nach dem Start in Schritt St1 wird nachfolgend in Schritt St2 insbesondere das Verfahren weitergeführt, wenn die Zündung eingeschaltet ist, das heißt bei Vorliegen des Zündungs-Signals S, und vorzugsweise auch bei Erfüllen eines Entscheidungskriteriums K1, das z.B. ermittelte Fahrzeug-Zustandsdaten beinhalten kann, z.B. eines oder mehrere aus der Gruppe:
- Fahreranforderung für einen Anfahrvorgang liegt vor,
- Radschlupf ms ist höher als definierter Radschlupf- Grenzwert ms_max
- geringer Haftwert (µ).

Somit wird in Schritt St3 eine Regelsequenz R gestartet und ein Regelsequenzsignal SR gesetzt, d.h. SR=1.

Nachfolgend sind ab Schritt St4 unterschiedliche Ausbildungen des erfindungsgemäßen Verfahrens möglich, wobei eine Bremsdrucksteuerung vorgenommen werden kann; es sind aber auch Ausbildungen ohne Bremsdrucksteuerungen möglich.

Gemäß einer ersten Ausbildung kann der Bremsdruck P4a und P4b für die beiden Hinterrad-Bremsen 14a und 14b zunächst gleich eingestellt und in St4 ein maximal zulässiges Motorantriebsmoment M4_max definiert. Dann wird der Bremsdruck in Schritt St5 bei beginnendem erhöhtem Radschlupf (ms) separat geregelt. Somit wird hier im Prinzip der Beginn eines ASR bzw. einer Antriebsschlupfregelung durchgeführt, bei der das Durchdrehen eines der angetriebenen Hinterräder 4a, 4b jeweils separat durch Abbremsen geregelt wird.

Alternativ hierzu kann jedoch auch bei Auftreten eines höheren Radschlupfes ms zum Beispiel am ersten Hinterrad 4a, das heißt n4a>n4b, der Bremsdruck P am anderen Hinterrad 4b abgesenkt werden. Dies kann somit in Schritt St5 erfolgen. Somit wird hier nicht das durchdrehende bzw. höhere Schlupf zeigende Hinterrad - hier 4a - abgebremst, sondern der Bremsdruck P am anderen Hinterrad - hier 4b - abgesenkt, um eine gleichmäßigere Schlupfbildung zu erreichen und die übertragene Antriebskraft Fa zu erhöhen. Dies kann insbesondere auch als Alternative zu einer Querdifferenzialsperre ausgebildet sein.

Diese beiden Ausführungen der separaten ASR-Regelung jedes Hinterrades 4a, 4b und des Absenkens des Bremsdrucks P an jeweils dem Rad an dem der geringere Schlupf vorliegt, können auch kombiniert werden.

Gemäß einer Ausbildung wird im Schritt St6 bei Erreichen von Grenzwerten wie z.B. einer Grenz-Fahrgeschwindigkeit v_tres und/oder eines Grenz-Haftwerts µ-tres die Regelsequenz deaktiviert und das Regelsequenz-Signal SR zurück gesetzt, d.h. SR=0, und das Verfahren in Schritt S7 beendet, ansonsten wird die Regelung erneut durchlaufen, d.h. hier zurückgesetzt vor Schritt St2.

Somit wird gemäß einer bevorzugten Ausbildung die Regelung vollständig in Fig. 4 in dem ersten, sicheren Zweig vor dem Maximalwert Fa_max durchgeführt. So kann der Anfahrvorgang z. B. bei Haftwerten bis zu einem Grenz-Haftwert µ_tres durchgeführt werden, und/oder bis zum Erreichen einer Grenz-Fahrgeschwindigkeit v_tres, woraufhin dann die Regelsequenz des Anfahrvorgangs beendet wird und eine Fahrt, z. B. mit einem herkömmlichen ASR bzw. ATC, durchgeführt wird. Somit wird zwar ein etwas langsamerer Anfahrvorgang erreicht und die Regelung nicht um den Maximalwert Fa, max herum durchgeführt; dafür wird erfindungsgemäß sichergestellt, dass der instabile Ast nicht beschritten wird und somit z. B. an einer Steigung kein Schlupf mit Durchdrehen der Räder auftreten kann.

### Bezugszeichenliste (Teil der Beschreibung)

- 1: Fahrzeug, insbesondere Nutzfahrzeug
- 2: Fahrbahn
- 3: Vorderräder
- 4a, 4b: angetriebene Hinterräder
- 5: Motor
- 6: Kupplungs-Getriebeeinheit, zum Beispiel für automatisches Getriebe
- 7: Fahrdynamik-System
- 9: Abtriebswelle
- 10: Motor-Steuereinrichtung
- 11: Getriebe-Steuereinrichtung
- 12: Brems-Steuereinrichtung
- 13: Bremssystem
- 14a, 14b: Radbremsen der angetriebenen Hinterräder
- 15a, 15b: Raddrehzahl-Sensoren an den Hinterrädern 4a, 4b
- 16: Fahrdynamik-Steuereinrichtung
- 18: Betätigungseinrichtung
- 19: Fahrpedal
- 20: Fahrpedal-Steuereinrichtung

- S1: Zündungs-Signal
- S2: Aktivierungs-Signal
- S3: Fahrpedal-Signal
- S4: Getriebesteuerungs-Anforderungssignal
- S5: Motormoment-Anforderungssignal
- S6: ATC-Anforderungssignal

- α: Neigung der Fahrbahn, Fahrbahnneigung
- µ: statischer Haftwert (Reibungskoeffizient) der Fahrbahn 2 zu den Rädern 3, 4a, 4b
- µd: dynamischer Haftwert der Fahrbahn 2 zu den Rädern 3, 4a, 4b

- A: Horizontale
- E: Einkuppelvorgang
- Fa: Antriebskraft
- Fa, max: maximal übertragbare Kraft
- Ha: Hinterachse
- HSKA: der instabile Ast
- k1: Entscheidungskriterium
- ms: Radschlupf der Hinterräder 4a, 4b
- ms(Fa, max): Zielschlupf

- M4: Motorantriebsmoment
- M4_max: maximales Motorantriebsmoment
- M9: Ausgangs-Abtriebsmoment
- n3: Radgeschwindigkeit der Vorderräder (3)
- n4a, n4b: Radgeschwindigkeiten der Hinterräder (4a, 4b)
- P: Bremsdruck
- P4a, P4b: Bremsdruck für die beiden Hinterrad-Bremsen
- R: Regelsequenz
- PR: Regelsequenz-Bremsdruck
- SR: Regelsequenz-Signal
- tc: Einkuppelvorgangsdauer
- tcs: Standardeinkuppelvorgangsdauer
- t: Zeit

- v: Fahrgeschwindigkeit
- Va: Vorderachse
- v_tres: Grenz-Fahrgeschwindigkeit
- µ_tres: Grenz-Haftwert

## Patentansprüche

1. Verfahren zur Regelung eines Anfahrvorgangs eines Fahrzeugs (1), mit mindestens folgenden Schritten:
a) Aktivierung einer Regelsequenz (R) und Setzen eines Regelsequenz-Signals (SR) vor Auftreten eines ersten Schlupfes,
b) Definieren eines maximalen Motorantriebsmomentes (M4_max), das geringer als ein maximales Motorantriebsmoment bei deaktivierter Regelsequenz ist,
c) bei Erkennen einer Fahranforderung für einen Anfahrvorgang
- c1) Ansteuern einer Kupplungs-Getriebeeinheit (6) mit einer Einkuppelvorgangsdauer (tc) größer als eine bei deaktivierter Regelsequenz (R) vorgesehene Standardeinkuppelvorgangsdauer (tcs),
- c2) unter Regelung von Radschlupfen (ms) der angetriebenen Räder (4a, 4b) durch Ermittlung von Radgeschwindigkeiten (n4a, n4b) der angetriebenen Räder (4a, 4b) und zumindest Einstellung eines Ausgangs-Antriebsmomentes (M9) an der Abtriebswelle (9),
- c3) Neudefinieren des maximalen Motorantriebsmomentes (M4_max) in Abhängigkeit der Radschlupfe (ms) und einer Fahrgeschwindigkeit (v), und
d) Deaktivieren der Regelsequenz (R) und Rücksetzen des Regelsequenz-Signals (SR) bei Erreichen von Grenzwerten (µ_tres, v_tres).

2. Verfahren nach Anspruch 1, **dadurch gekennzeichnet, dass** die Regelung von Radschlupfen (ms) der angetriebenen Räder (4a, 4b) durch Messung von Radgeschwindigkeiten (n4a, n4b) der angetriebenen Räder (4a, 4b) und Radgeschwindigkeiten (n3) der nicht angetriebenen Räder (3) und Einstellung eines Antriebsmomentes (M9) die Ansteuerung zumindest einer Kupplungs-Getriebeeinheit (6) (St4) aufweist.

3. Verfahren nach Anspruch 2, **dadurch gekennzeichnet, dass** bei der Ansteuerung der Kupplungs-Getriebeeinheit (6) zum Einstellen des Ausgangs-Antriebsmomentes (M9) eine Kupplung (6a) mit einer Rampenfunktion, insbesondere in Abhängigkeit der Zeit (t) oder der Radgeschwindigkeit (n4) der angetriebenen Räder (4a, 4b) eingelegt wird.

4. Verfahren nach einem der vorherigen Ansprüche, **dadurch gekennzeichnet, dass** nach der Aktivierung der Regelsequenz (R) die Kupplungs-Getriebeeinheit (6) die Kupplung (6a) ausrückt.

5. Verfahren nach einem der vorherigen Ansprüche, **dadurch gekennzeichnet, dass**
- vor der Regelung der Radschlupfe (ms) folgender Schritt vorgesehen ist: a1) Anlegen eines Regelsequenz-Bremsdrucks (PR) an Radbremsen (14a, 14b) von angetriebenen Rädern (4a, 4b) des Fahrzeugs (1), und
- nach dem Schritt c2) der Regelung der Radschlupfe (ms) der angetriebenen Räder folgender Schritt vorgesehen ist:
c2a) Verringern eines Bremsdrucks (P) an Radbremsen (14a, 14b) der angetriebenen Räder (4a, 4b).

6. Verfahren nach Anspruch 5, **dadurch gekennzeichnet, dass** vor dem Anlegen des Regelsequenz-Bremsdrucks (PR) an den Radbremsen (14a, 14b) von angetriebenen Rädern (4a, 4b) der Bremsdruck (P) derart erhöht wird, dass die angetriebenen Räder (4a, 4b) zum Stillstand kommen.

7. Verfahren nach einem der vorherigen Ansprüche, **dadurch gekennzeichnet, dass** in Schritt c2) die Einstellung des Ausgangs-Antriebsmomentes (M9) an der Abtriebswelle (9) durch Ansteuerung zumindest einer Kupplungs-Getriebeeinheit (6) erfolgt.

8. Verfahren nach einem der vorherigen Ansprüche, **dadurch gekennzeichnet, dass** bei der Regelung der Radschlupfe (ms) durch Einstellung des Ausgangs-Antriebsmomentes (M9) zusätzlich zu der Kupplungs-Getriebeeinheit (6) der Motor (5) angesteuert wird.

9. Verfahren nach einem der vorherigen Ansprüche, **dadurch gekennzeichnet, dass** bei der Regelung der Radschlupfe (ms) durch Einstellung des Ausgangs-Antriebsmomentes (M9) zusätzlich zu der Kupplungs-Getriebeeinheit (6) der Bremsdruck (P) der angetriebenen Räder (4a, 4b) geregelt wird.

10. Verfahren nach Anspruch 9, **dadurch gekennzeichnet, dass** die Regelung des Bremsdrucks (P4a, P4b) der angetriebenen Räder (4a, 4b), insbesondere ein Absenken des Bremsdrucks (P4a, P4b), in Abhängigkeit der Zeit (t) oder der Radgeschwindigkeit (n4a, n4b) erfolgt.

11. Verfahren nach einem der vorherigen Ansprüche, **dadurch gekennzeichnet, dass** bei Ermitteln eines höheren Schlupfes (ms) an einem ersten angetriebenen Rad (4a) an dem anderen angetriebenen Rad (4b) der gleichen Achse der Bremsdruck (P) abgesenkt wird.

12. Verfahren nach einem der vorherigen Ansprüche, **dadurch gekennzeichnet, dass** die Aktivierung der Regelsequenz (R) bei Eingabe eines Aktivierungssignals (S2) durch den Fahrer, zum Beispiel durch Betätigen einer Betätigungseinrichtung (18) erfolgt.

13. Verfahren nach einem der vorherigen Ansprüche, **dadurch gekennzeichnet, dass** die Aktivierung der Regelsequenz (R) bei Erfüllen eines Entscheidungskriteriums (K1) in Abhängigkeit ermittelter Fahrzeug-Zustandsdaten erfolgt, z.B. einer oder mehrerer aus der Gruppe:
- Fahreranforderung für einen Anfahrvorgang liegt vor,
- Radschlupf (ms) ist höher als definierter Radschlupf- Grenzwert (ms_max)
- geringer Haftwert (µ).

14. Verfahren nach Anspruch 13, **dadurch gekennzeichnet, dass** übertragbare Antriebskräfte (Fa) auf die Fahrbahn (2) anhand des Schlupfes (ms) des letzten Bremsvorgangs oder der Schlupfe (ms) der letzten Brems- und Beschleunigungsvorgänge ermittelt werden.

15. Verfahren nach einem der vorherigen Ansprüche, **dadurch gekennzeichnet, dass** beim Schritt c2) der Regelung des Anfahrvorgangs gespeicherte Haftwert-Schlupf-Kurven herangezogen werden, zur Einstellung des Schlupfes (ms), der den maximalen Haftwert (µ_tres) erzeugt.

16. Verfahren nach einem der vorherigen Ansprüche, **dadurch gekennzeichnet, dass** beim Schritt b) des Definierens eines maximalen Antriebsmomentes (M4_max) und/oder c3) des Neudefinierens eines maximalen Antriebsmomentes (M4_max) ein Haftwert (µ) zwischen den angetriebenen Rädern (4a, 4b) und der Fahrbahn (2) ermittelt wird, durch Verwendung von Achslastdaten der angetriebenen Räder (4a, 4b) und Ermittlung des sich einstellenden Schlupfes (ms) bei bekannter Antriebs-Momenteneinleitung in die Antriebsachse (Ha).

17. Verfahren nach einem der vorherigen Ansprüche, **dadurch gekennzeichnet, dass** die Grenzwerte (µ_tres, v_tres) bei gesetztem Regelsequenz-Signal (SR) kleiner sind als bei ungesetztem Regelsequenz-Signal (SR).

18. Verfahren nach einem der vorherigen Ansprüche, **dadurch gekennzeichnet, dass** der Grenzwert (µ_tres, v_tres) zum Deaktivieren der Regelsequenz (R ) und Rücksetzen des Regelsequenz-Signals (SR) ein Grenz-Haftwert (µ_tres) und/oder eine Grenz-Fahrgeschwindigkeit (v_tres) ist.

19. Fahrdynamik-System (7) zur Steuerung oder Regelung eines Anfahrvorgangs eines Fahrzeugs (1), insbesondere eines Nutzfahrzeuges (1), das aufweist:
Raddrehzahl-Sensoren (15a, 15b) zur Ausgabe von den Radgeschwindigkeitssignalen (n4a, n4b) der angetriebenen Räder (4a, 4b) des Fahrzeugs (1),
eine Fahrdynamik-Steuereinrichtung (16) zur Aufnahme eines FahrpedalSignals (S3) und der Radgeschwindigkeitssignale (n4a, n4b) und zur Ausgabe von Anforderungssignalen (S4, S5) an eine Antriebs-Einheit (5, 6) des Fahrzeugs (1), wobei die Fahrdynamik-Steuereinrichtung (16) ausgebildet ist, das Verfahren gemäß einem der Ansprüche 1 bis 18 durchzuführen.

20. Fahrdynamik-System (7) nach Anspruch 19, **dadurch gekennzeichnet, dass** die Fahrdynamik-Steuereinrichtung (16) zur Ausgabe eines Getriebesteuerungs-Anforderungssignals (S4) an eine Getriebe- Steuereinrichtung (11) und/oder zur Ausgabe eines Motormoment-Anforderungssignals (S5) an eine Motorsteuereinheit (10) ausgebildet ist.

21. Fahrdynamik-System (7) nach Anspruch 19 oder 20, **dadurch gekennzeichnet, dass** die Fahrdynamik-Steuereinrichtung (16) zur Ausgabe eines ATC-Anforderungssignals (S6) an eine Brems-Steuereinrichtung (12) ausgebildet ist.

22. Fahrdynamik-System (7) nach einem der Ansprüche 19 bis 21, **dadurch gekennzeichnet, dass** die Radbremsen (14a, 14b) der angetriebenen Rädern (4a, 4b) Teil einer Betriebsbremse und/oder eine Feststellbremse sind.

23. Fahrdynamik-System (7) nach einem der Ansprüche 19 bis 22, **dadurch gekennzeichnet, dass** die Raddrehzahl-Sensoren (15a, 15b) aktive Raddrehzahl-Sensoren (15a, 15b) sind.

## Claims

1. Method for controlling a start-up process of a vehicle (1), comprising at least the following steps:
a) activating a control sequence (R) and setting a control sequence signal (SR) before a first slip occurs,
b) defining a maximum engine drive torque (M4_max) that is less than a maximum engine drive torque when the control sequence is deactivated,
c) when a driving request for a start-up process is detected
- c1) actuating a clutch-transmission unit (6) with an engagement process duration (tc) greater than a standard engagement process duration (tcs) provided when the control sequence (R) is deactivated,
- c2) while controlling wheel slip (ms) of the driven wheels (4a, 4b) by determining wheel speeds (n4a, n4b) of the driven wheels (4a, 4b) and at least adjusting an output drive torque (M9) at the output shaft (9),
- c3) redefining the maximum engine drive torque (M4_max) according to the wheel slip (ms) and a driving speed (v), and
d) deactivating the control sequence (R) and resetting the control sequence signal (SR) when limit values (µ_tres, v_tres) are reached.

2. Method according to claim 1, **characterized in that** the control of wheel slip (ms) of the driven wheels (4a, 4b) by measuring wheel speeds (n4a, n4b) of the driven wheels (4a, 4b) and wheel speeds (n3) of the non-driven wheels (3) and adjusting a drive torque (M9) comprises the actuation of at least one clutch-transmission unit (6) (St4).

3. Method according to claim 2, **characterized in that,** when the clutch-transmission unit (6) is actuated in order to adjust the output drive torque (M9), a clutch (6a) is engaged with a ramp function, in particular as a function of the time (t) or the wheel speed (n4) of the driven wheels (4a, 4b).

4. Method according to any one of the preceding claims,
**characterized in that,** after activating the control sequence (R), the clutch-transmission unit (6) disengages the clutch (6a).

5. Method according to any one of the preceding claims,
**characterized in that**
- the following step is provided before controlling the wheel slip (ms):
a1) applying a control sequence brake pressure (PR) to wheel brakes (14a, 14b) of driven wheels (4a, 4b) of the vehicle (1), and
- the following step is provided after step c2) of controlling the wheel slip (ms) of the driven wheels:
c2a) reducing a brake pressure (P) on wheel brakes (14a, 14b) of the driven wheels (4a, 4b).

6. Method according to claim 5, **characterized in that,** before applying the control sequence brake pressure (PR) to the wheel brakes (14a, 14b) of driven wheels (4a, 4b), the brake pressure (P) is increased such that the driven wheels (4a, 4b) come to a standstill.

7. Method according to any one of the preceding claims,
**characterized in that,** in step c2), the output drive torque (M9) at the output shaft (9) is adjusted by actuating at least one clutch-transmission unit (6).

8. Method according to any one of the preceding claims,
**characterized in that,** when controlling the wheel slip (ms) by adjusting the output drive torque (M9), the engine (5) is actuated in addition to the clutch-transmission unit (6).

9. Method according to any one of the preceding claims,
**characterized in that,** when controlling the wheel slip (ms) by adjusting the output drive torque (M9), the brake pressure (P) of the driven wheels (4a, 4b) is controlled in addition to the clutch-transmission unit (6).

10. Method according to claim 9, **characterized in that** the control of the brake pressure (P4a, P4b) of the driven wheels (4a, 4b), in particular a reduction of the brake pressure (P4a, P4b), takes place as a function of the time (t) or the wheel speed (n4a, n4b).

11. Method according to any one of the preceding claims, **characterized in that,** when a higher slip (ms) is detected at a first driven wheel (4a), the brake pressure (P) is reduced at the other driven wheel (4b) on the same axle.

12. Method according to any one of the preceding claims, **characterized in that** the activation of the control sequence (R) occurs when an activation signal (S2) is input by the driver, for example by actuating an actuating device (18).

13. Method according to any one of the preceding claims, **characterized in that** the activation of the control sequence (R) occurs when a decision criterion (K1) is met according to determined vehicle state data, e.g. one or more from the group of:
- driver request for a start-up procedure is present,
- wheel slip (ms) is higher than a defined wheel slip limit value (ms_max)
- low adhesion value (µ).

14. Method according to claim 13, **characterized in that** transmissible driving forces (Fa) to the road (2) are determined on the basis of the slip (ms) of the last braking operation or the slip (ms) of the last braking and acceleration operations.

15. Method according to any one of the preceding claims, **characterized in that,** in step c2) of the control of the start-up process, stored adhesion value-slip curves are used to set the slip (ms) which generates the maximum adhesion value (µ_tres).

16. Method according to any one of the preceding claims,
**characterized in that,** in step b) of defining a maximum drive torque (M4_max) and/or c3) of redefining a maximum drive torque (M4_max), an adhesion value (µ) between the driven wheels (4a, 4b) and the road (2) is determined by using axle load data of the driven wheels (4a, 4b) and determining the resulting slip (ms) in the case of known drive torque introduction into the drive axle (Ha).

17. Method according to any one of the preceding claims,
**characterized in that** the limit values (µ_tres, v_tres) are smaller when the control sequence signal (SR) is set than when the control sequence signal (SR) is not set.

18. Method according to any one of the preceding claims,
**characterized in that** the limit value (µ_tres, v_tres) for deactivating the control sequence (R) and resetting the control sequence signal (SR) is a limit adhesion value (µ_tres) and/or a limit driving speed (v_tres).

19. Driving dynamics system (7) for regulating or controlling a start-up process of a vehicle (1), in particular a commercial vehicle (1), comprising:
wheel speed sensors (15a, 15b) for outputting the wheel speed signals (n4a, n4b) of the driven wheels (4a, 4b) of the vehicle (1),
a driving dynamics control device (16) for receiving an accelerator pedal signal (S3) and the wheel speed signals (n4a, n4b) and for outputting request signals (S4, S5) to a drive unit (5, 6) of the vehicle (1), wherein the driving dynamics control device (16) is designed to carry out the method according to any one of claims 1 to 18.

20. Driving dynamics system (7) according to claim 19, **characterized in that** the driving dynamics control device (16) is designed to output a transmission control request signal (S4) to a transmission control device (11) and/or to output an engine torque request signal (S5) to an engine control unit (10).

21. Driving dynamics system (7) according to claim 19 or 20,
**characterized in that** the driving dynamics control device (16) is designed to output an ATC request signal (S6) to a brake control device (12).

22. Driving dynamics system (7) according to any one of claims 19 to 21, **characterized in that** the wheel brakes (14a, 14b) of the driven wheels (4a, 4b) are part of a service brake and/or a parking brake.

23. Driving dynamics system (7) according to any one of claims 19 to 22, **characterized in that** the wheel speed sensors (15a, 15b) are active wheel speed sensors (15a, 15b).

## Revendications

1. Procédé pour la régulation d'un processus de démarrage d'un véhicule (1), comportant au moins les étapes suivantes :
a) activation d'une séquence de régulation (R) et déploiement d'un signal de séquence de régulation (SR) avant l'apparition d'un premier patinage,
b) définition d'un couple d'entraînement de moteur maximal (M4_max) qui est inférieur à un couple d'entraînement de moteur maximal lorsque la séquence de régulation est désactivée,
c) lors d'une détection d'une demande de conduite pour un processus de démarrage
- c1) commande d'une unité embrayage-transmission (6) comportant une durée de processus d'embrayage (tc) supérieure à une durée de processus d'embrayage standard (tcs) prévue lorsque la séquence de régulation (R) est désactivée,
- c2) en régulant des patinages de roue (ms) des roues motrices (4a, 4b) par la détermination des vitesses de roue (n4a, n4b) des roues motrices (4a, 4b) et par le réglage d'au moins un couple d'entraînement de sortie (M9) sur l'arbre de sortie (9),
- c3) redéfinition du couple d'entraînement de moteur maximal (M4_max) en fonction du patinage de roue (ms) et d'une vitesse de conduite (v), et
d) désactivation de la séquence de régulation (R) et réinitialisation du signal de séquence de régulation (SR) lorsque des valeurs limites (µ_tres, v_tres) sont atteintes.

2. Procédé selon la revendication 1, **caractérisé en ce que** la régulation des patinages de roue (ms) des roues motrices (4a, 4b) par la mesure des vitesses de roue (n4a, n4b) des roues motrices (4a, 4b) et des vitesses de roue (n3) des roues non motrices (3) et par le réglage d'un couple d'entraînement (M9) présente la commande d'au moins une unité embrayage-transmission (6) (St4).

3. Procédé selon la revendication 2, **caractérisé en ce que,** lors de la commande de l'unité embrayage-transmission (6) pour le réglage du couple d'entraînement de sortie (M9), un embrayage (6a) est engagé avec une fonction de rampe, en particulier en fonction du temps (t) ou de la vitesse de roue (n4) des roues motrices (4a, 4b).

4. Procédé selon l'une des revendications précédentes,
**caractérisé en ce que,** après l'activation de la séquence de régulation (R), l'unité embrayage-transmission (6) désengage l'embrayage (6a).

5. Procédé selon l'une des revendications précédentes, **caractérisé en ce que**
- avant la régulation du patinage de roue (ms), l'étape suivante est prévue :
a1) application d'une pression de freinage de séquence de régulation (PR) sur des freins de roue (14a, 14b) de roues motrices (4a, 4b) du véhicule (1), et
- après l'étape c2) de régulation du patinage de roue (ms) des roues motrices, l'étape suivante est prévue :
c2a) réduction d'une pression de freinage (P) sur des freins de roue (14a, 14b) des roues motrices (4a, 4b).

6. Procédé selon la revendication 5, **caractérisé en ce que,** avant l'application de la pression de freinage de séquence de régulation (PR) sur les freins de roue (14a, 14b) de roues motrices (4a, 4b), la pression de freinage (P) est augmentée de telle sorte que les roues motrices (4a, 4b) viennent à l'arrêt.

7. Procédé selon l'une des revendications précédentes,
**caractérisé en ce que,** à l'étape c2), le réglage du couple d'entraînement de sortie (M9) sur l'arbre de sortie (9) est effectué par commande d'au moins une unité embrayage-transmission (6).

8. Procédé selon l'une des revendications précédentes,
**caractérisé en ce que,** lors de la régulation du patinage de roue (ms) par réglage du couple d'entraînement de sortie (M9), le moteur (5) est commandé en plus de l'unité embrayage-transmission (6).

9. Procédé selon l'une des revendications précédentes,
**caractérisé en ce que,** lors de la régulation du patinage de roue (ms) par réglage du couple d'entraînement de sortie (M9), la pression de freinage (P) des roues motrices (4a, 4b) est régulée en plus de l'unité embrayage-transmission (6).

10. Procédé selon la revendication 9, **caractérisé en ce que** la régulation de la pression de freinage (P4a, P4b) des roues motrices (4a, 4b), en particulier une diminution de la pression de freinage (P4a, P4b), est effectuée en fonction du temps (t) ou de la vitesse de roue (n4a, n4b).

11. Procédé selon l'une des revendications précédentes,
**caractérisé en ce que,** lorsqu'un patinage (ms) plus important est déterminé sur une première roue motrice (4a), la pression de freinage (P) est diminuée sur l'autre roue motrice (4b) du même essieu.

12. Procédé selon l'une des revendications précédentes,
**caractérisé en ce que** l'activation de la séquence de régulation (R) est effectuée lors d'une entrée d'un signal d'activation (S2) par le conducteur, par exemple en actionnant un dispositif d'actionnement (18).

13. Procédé selon l'une des revendications précédentes,
**caractérisé en ce que** l'activation de la séquence de régulation (R) est effectuée lorsqu'un critère de décision (K1) est satisfait en fonction de données d'état de véhicule déterminées, par exemple une ou plusieurs provenant du groupe :
- une demande de conduite pour un processus de démarrage est présente,
- un patinage de roue (ms) est supérieur à une valeur limite de patinage de roue (ms_max) définie
- une faible valeur d'adhérence (µ).

14. Procédé selon la revendication 13, **caractérisé en ce que** des forces motrices (Fa) transmissibles à la chaussée (2) sont déterminées à l'aide du patinage (ms) du dernier processus de freinage ou des patinages (ms) des derniers processus de freinage et d'accélération.

15. Procédé selon l'une des revendications précédentes, **caractérisé en ce que,** lors de l'étape c2) de régulation du processus de démarrage, on fait appel à des courbes valeur d'adhérence-patinage mémorisées pour le réglage du patinage (ms) qui génère la valeur d'adhérence maximale (µ_tres).

16. Procédé selon l'une des revendications précédentes,
**caractérisé en ce que** lors de l'étape b) de définition d'un couple d'entraînement maximal (M4_max) et/ou c3) de redéfinition d'un couple d'entraînement maximal (M4_max), une valeur d'adhérence (µ) entre les roues motrices (4a, 4b) et la chaussée (2) est déterminée en utilisant des données de charge d'essieu des roues motrices (4a, 4b) et en déterminant le patinage (ms) qui se règle pour une introduction de couple d'entraînement connue dans l'essieu d'entraînement (Ha).

17. Procédé selon l'une des revendications précédentes,
**caractérisé en ce que** les valeurs limites (µ_tres, v_tres) sont plus petites lorsque le signal de séquence de régulation (SR) est déployé que lorsque le signal de séquence de régulation (SR) n'est pas déployé.

18. Procédé selon l'une des revendications précédentes, **caractérisé en ce que** la valeur limite (µ_tres, v_tres) pour la désactivation de la séquence de régulation (R) et pour la réinitialisation du signal de séquence de régulation (SR) est une valeur d'adhérence limite (µ_tres) et/ou une vitesse de conduite limite (v_tres).

19. Système de dynamique de conduite (7) pour la commande ou la régulation d'un processus de démarrage d'un véhicule (1), en particulier d'un véhicule utilitaire (1), qui présente :
des capteurs de vitesse de rotation de roue (15a, 15b) pour la sortie de signaux de vitesse de roue (n4a, n4b) des roues motrices (4a, 4b) du véhicule (1),
un dispositif de commande de dynamique de conduite (16) pour la réception d'un signal de pédale d'accélérateur (S3) et des signaux de vitesse de roue (n4a, n4b) et pour la sortie de signaux de demande (S4, S5) à une unité formant entraînement (5, 6) du véhicule (1), dans lequel le dispositif de commande de dynamique de conduite (16) est configuré pour mettre en oeuvre le procédé selon l'une des revendications 1 à 18.

20. Système de dynamique de conduite (7) selon la revendication 19, **caractérisé en ce que** le dispositif de commande de dynamique de conduite (16) est configuré pour délivrer en sortie un signal de demande de commande de transmission (S4) à un dispositif de commande de transmission (11) et/ou pour délivrer en sortie un signal de demande de couple moteur (S5) à une unité de commande de moteur (10).

21. Système de dynamique de conduite (7) selon la revendication 19 ou 20, **caractérisé en ce que** le dispositif de commande de dynamique de conduite (16) est configuré pour délivrer en sortie un signal de demande ATC (S6) à un dispositif de commande de freinage (12).

22. Système de dynamique de conduite (7) selon l'une des revendications 19 à 21, **caractérisé en ce que** les freins de roue (14a, 14b) des roues motrices (4a, 4b) font partie d'un frein de service et/ou d'un frein de stationnement.

23. Système de dynamique de conduite (7) selon l'une des revendications 19 à 22, **caractérisé en ce que** les capteurs de vitesse de rotation de roue (15a, 15b) sont des capteurs de vitesse de rotation de roue (15a, 15b) actifs.
